# EUROPEAN PATENT APPLICATION

(11) **EP 4 428 098 A1**
(43) Date of publication of application: **11.09.2024**
(21) Application number: 22889842.5
(22) Date of filing: 25.10.2022
(51) Int. Cl.: C01C 1/02, B01J 23/58, B01J 23/63

(54) **UNIT AND METHOD FOR PRODUCING AMMONIA, AND CATALYST MATERIAL**

(30) Priority: 05.11.2021 JP 2021181476
(71) Applicant: National Institute of Advanced Industrial Science and Technology, Chiyoda-ku Tokyo 100-8921 (JP)
(72) Inventor: TOMITA, Atsuko, Nagoya-shi, Aichi 463-8560 (JP); WAKABAYASHI, Ryutaro, Nagoya-shi, Aichi 463-8560 (JP); KIMURA, Tatsuo, Nagoya-shi, Aichi 463-8560 (JP)
(74) Representative: Dehns
(86) International application number: PCT/JP2022/039785
(87) International publication number: WO 2023/080022

(57) **Abstract**

A production unit 100 includes a production apparatus 20 including: a reaction tube U in which a catalyst material Q containing noble metal is housed; a first supply path R1 configured to supply a source gas (exhaust gas) G1 containing NOx and oxygen to the reaction tube U; a second supply path R2 configured to supply a reducing gas G2 not containing NOx to the reaction tube U; and a recovery path R3 configured to recover produced ammonia from the reaction tube U, and a control apparatus 30 configured to control the production apparatus 20, wherein the control apparatus 30 makes the production apparatus 20 perform a production process including: a first step of supplying the source gas G1 to the catalyst material Q to store NOx in the source gas G1 in the catalyst material Q, and a second step of stopping supply of the source gas G1 and then supplying the reducing gas G2 to the catalyst material Q to produce and recover ammonia from NOx stored in the catalyst material Q.

## Description

### Technical Field

The present invention relates to a technique for producing ammonia from nitrogen oxide (NOx).

### Background Art

As a method for producing ammonia (NH₃), the Haber-Bosch process is known. In the Haber-Bosch process, ammonia is produced using nitrogen and hydrogen as raw materials. However, ammonia needs to be generated under high temperature and high pressure (400 to 600°C, 200 to 400 atm), and a large energy input is required.

On the other hand, for example, in a high-temperature combustion facility, nitrogen oxide derived from combustion (so-called thermal NOx) exists in the exhaust gas. The nitrogen oxide in the exhaust gas is detoxified to nitrogen and released. Therefore, if ammonia can be produced from NOx in the exhaust gas, the waste can be recycled. In addition, when the temperature of the heat engine is increased to improve the energy efficiency, the thermal NOx generation amount may further increase. However, if the generated thermal NOx can be recovered as ammonia, the energy efficiency of the heat engine may be improved without increasing the release amount of nitrogen oxides.

Herein, as a detoxification technique for removing NOx in the exhaust gas, there generally used an ammonia selective catalyst reduction (NH₃-SCR) method in which ammonia is added as a reducing agent from the outside to reduce NOx on a catalyst, and the like.

On the other hand, in a catalyst material technology for cleaning exhaust gas for automobiles, Non-Patent Literature 1 discloses a technology in which NOx is temporarily stored (adsorbed) in a catalyst, then reduced to nitrogen (N₂), and released into the atmosphere.

As a result of clarification of the process of cleaning the exhaust gas, there has been confirmed a phenomenon in which a small amount of ammonia is produced as an intermediate product in the system. However, slightly produced ammonia is used as a reducing agent for NOx. Therefore, there are disclosed various techniques with ammonia produced as an intermediate product as a reducing agent.

For example, Patent Literatures 1 to 3 disclose a technique of generating ammonia as an intermediate product in an internal combustion engine in which a fuel is supplied and combusted under periodic rich/lean combustion conditions. Specifically, after NOx is adsorbed to the catalyst under the lean condition and concentrated and recovered, NOx adsorbed to the catalyst is reduced by being controlled to the rich condition. Ammonia is produced under the rich condition. Then, when the lean condition is reached again, the produced ammonia reacts with NOx in the exhaust gas and is reduced to harmless nitrogen. As described above, ammonia is used as a reducing agent for reducing NOx.

In addition, Patent Literature 4 discloses an exhaust gas cleaning apparatus that temporarily adsorbs NOx in an air-rich atmosphere and reduces NOx in a reducing atmosphere to generate ammonia as an intermediate product. The produced ammonia is further used as a reducing agent for reducing NOx. Further, Patent Literature 5 discloses a technique of converting NOx in exhaust gas discharged from a combustor into ammonia. The produced ammonia is again charged to the combustor and used as a reducing agent to reduce NOx.

Similarly, Non-Patent Literatures 2 and 3 disclose an experiment for confirming a state in which nitrogen, nitrous oxide (N₂O), and ammonia are generated from NOx by supplying a gas containing NOx under a lean condition and then supplying a reducing gas under a rich condition in a catalyst material technology simulating a lean combustion gasoline engine for an automobile.

Further, Non-Patent Literatures 4 and 5 disclose that ammonia is produced by simultaneously supplying NOx and a reducing gas to a catalyst material under no oxygen.

### Citation List

### Patent Literature

Patent Literature 1: JP 2009-103020 A
Patent Literature 2: Japanese Patent No. 4740217
Patent Literature 3: JP 2005-111436 A
Patent Literature 4: Japanese Patent No. 5431677
Patent Literature 5: JP 2020-090949 A

### Non-Patent Literature

Non-Patent Literature 1: N. Takahashi et al., Catalysis Today, 27 (1996) 63
Non-Patent Literature 2: P. Koci, S. Bartova, D. Mracek, M. Marek, J.-S. Choi, M.-Y. Kim, J. A. Pihl, W. P. Partridge, Effective model for prediction of N2O and NH3 formation during the regeneration of NOx storage catalyst, Topics in Catalysis, 2013, 56, 118-124.
Non-Patent Literature 3: D. Mracek, P. Koci, J.-S. Choi, W. P. Partridge, New operation strategy for driving the selectivity of NOx reduction to N2, NH3 or N2O during lean/rich cycling of a lean NOx trap catalyst, Applied Catalysis B: Environmental 2016, 182, 109-114
Non-Patent Literature 4: C. Asokan, Y. Yang, A. Dang, A. B. Getsoian, P. Christopher, Low-temperature ammonia production during NO reduction by CO is due to atomically dispersed rhodium active sites, ACS Catalysis, 2020, 10, 5217-5222.
Non-Patent Literature 5: S. M. Park, M.-Y. Kim, E. S. Kim, H.-S. Han, G. Seo, H2-SCR of NO on Pt-MnOx catalysts: Reaction path via NH3 formation, Applied Catalysis A, 2011, 395, 120-128.

### Summary of Invention

### Technical Problem

As described above, in the techniques of Patent Literatures 1 to 5 and Non-Patent Literatures 2 to 5, the produced ammonia is assumed to be used as a reducing agent for reducing NOx, and is not assumed to be recovered as a resource. In view of the above circumstances, an object of the present invention is to produce and recover ammonia from NOx.

### Solution to Problem

[1] A production unit according to the present invention is a unit configured to produce ammonia, including: a production apparatus including a reaction tube in which a catalyst material containing noble metal is housed, a first supply path configured to supply an exhaust gas containing NOx and oxygen to the reaction tube, a second supply path configured to supply a reducing gas not containing NOx to the reaction tube, and a recovery path configured to recover produced ammonia from the reaction tube; and a control apparatus configured to control the production apparatus, wherein the control apparatus makes the production apparatus perform a production process including: a first step of supplying the exhaust gas to the catalyst material to allow NOx in the exhaust gas to be stored in the catalyst material; and a second step of stopping supply of the exhaust gas, then supplying the reducing gas to the catalyst material to produce and recover ammonia from NOx stored in the catalyst material.
[2] The production unit according to [1], wherein the production process is repeatedly performed.
[3] A production unit according to another aspect of the present invention is a unit for producing ammonia, including: a production apparatus including N (N is a natural number of 2 or more) reaction tubes in which a catalyst material containing noble metal is housed, N first supply paths configured for respectively supplying exhaust gas containing NOx and oxygen to the N reaction tubes, N second supply paths configured for respectively supplying a reducing gas not containing NOx to the N reaction tubes, and N recovery paths configured for respectively recovering produced ammonia from the N reaction tubes; and a control apparatus configured to control the production apparatus, wherein for each of the N reaction tubes, the control apparatus makes the production apparatus repeatedly perform a production process including: a first step of supplying the exhaust gas to the reaction tube to store NOx in the exhaust gas in the catalyst material; and a second step of stopping supply of the exhaust gas and then supplying the reducing gas to the reaction tube to produce and recover ammonia from NOx stored in the catalyst material, the second step is performed for (N - K) reaction tubes while the first step is performed for K (K is a natural number less than N) reaction tubes among the N reaction tubes, and the first step is performed for the (N - K) reaction tubes while the second step is performed for the K reaction tubes.
[4] The production unit according to [3], wherein the production apparatus includes N first on-off valves that respectively open and close the N first supply paths, and N second on-off valves that respectively open and close the N second supply paths, and in the first step, the control apparatus opens the first on-off valves and closes the second on-off valves, and in the second step, closes the first on-off valves and opens the second on-off valves.
[5] The production unit according to [3] or [4], wherein the production apparatus includes N exhaust paths configured to exhaust gas from the N reaction tubes, N third on-off valves configured to open and close the N recovery paths, and N fourth on-off valves configured to open and close the N exhaust paths, and for each of the N reaction tubes, the control apparatus closes the third on-off valves and opens the fourth on-off valves in the first step, and opens the third on-off valves and closes the fourth on-off valves in the second step.
[6] A production method according to the present invention is a method for producing ammonia, the method including: a first step of supplying an exhaust gas containing NOx and oxygen to a catalyst material containing noble metal to store NOx in the exhaust gas in the catalyst material; and a second step of stopping supply of the exhaust gas, and then supplying a reducing gas not containing NOx to the catalyst material to produce and recover ammonia from NOx stored in the catalyst material.
[7] A production method according to another aspect of the present invention is a method for producing ammonia, wherein a production apparatus including N (N is a natural number of two or more) reaction tubes each containing a catalyst material containing noble metal performs repeatedly a production process including: a first step of supplying exhaust gas containing NOx and oxygen to each of the N reaction tubes to store NOx in the exhaust gas in the catalyst material; and a second step of stopping supply of the exhaust gas, and then supplying a reducing gas not containing NOx to the reaction tube to produce and recover ammonia from NOx stored in the catalyst material, the second step is performed for (N - K) reaction tubes while the first step is performed for K (K is a natural number less than N) reaction tubes among the N reaction tubes, and the first step is performed for the (N - K) reaction tubes while the second step is performed for the K reaction tubes.
[8] The production method according to [6] or [7], wherein the reducing gas contains any one or more of H₂, C₃H₆, C₃H₈, and CH₄.
[9] The production method according to [6] to [8], wherein at least one of temperatures of the exhaust gas and the reducing gas and a temperature of the catalyst material is 150 to 500°C.
[10] The production method according to [6] to [9], wherein the catalyst material contains the noble metal, at least one of alkali metal and alkaline earth metal, and oxide support.
[11] The production method according to [6] to [10], wherein the noble metal is one or more of platinum, palladium, rhodium, and iridium, and a content of the noble metal is 0.01 to 20.0 mass% relative to 100 mass% of the entire catalyst material.
[12] The production method according to [10], wherein the alkali metal is one or more selected from lithium, potassium, sodium, and cesium, the alkaline earth metal is one or more selected from calcium, magnesium, strontium, and barium, and contents of the alkali metal and the alkaline earth metal are 0.1 to 50.0 mass% relative to 100 mass% of the entire catalyst material.
[13] The production method according to [10], wherein the oxide support is any one or more of Al₂O₃, CeO₂, TiO₂, and ZrO₂.
[14] The production method according to [10] or [12], wherein the oxide support is Al₂O₃, the noble metal is contained inside the Al₂O₃, and the alkali metal and the alkaline earth metal are supported on the Al₂O₃ containing the noble metal inside.
[15] A catalyst material according to the present invention is a catalyst material used in the production method according to [6] to [14], and is a nanocomposite material with pores regularly disposed, including noble metal, at least one of alkali metal and alkaline earth metal, and porous alumina, wherein the noble metal is contained inside the porous alumina, the alkali metal and the alkaline earth metal are supported on the porous alumina containing the noble metal inside, and a mode in a pore size distribution is 1 to 200 nm in diameter.

### Advantageous Effects of Invention

An object of a production apparatus and a production method according to the present invention is to reduce the influence of a coexisting gas in a source gas (typically, an exhaust gas) and to produce and recover ammonia from NOx.

### Brief Description of Drawings

Fig. 1 is a configuration diagram of a production unit according to a first embodiment.
Fig. 2 is a flowchart of processing performed by a production apparatus according to the first embodiment.
Fig. 3 is a configuration diagram of a production unit according to a second embodiment.
Fig. 4 is a flowchart of processing performed by a production apparatus according to the second embodiment.
Fig. 5 is a configuration diagram for explaining the operation of the production apparatus according to the second embodiment.
Fig. 6 is a configuration diagram for explaining the operation of the production apparatus according to the second embodiment.
Fig. 7 is a configuration diagram of a production unit according to a third embodiment.
Fig. 8 is a configuration diagram for explaining the operation of a production apparatus according to the third embodiment.
Fig. 9 is a configuration diagram for explaining the operation of the production apparatus according to the third embodiment.

### Description of Embodiments

### [First embodiment]

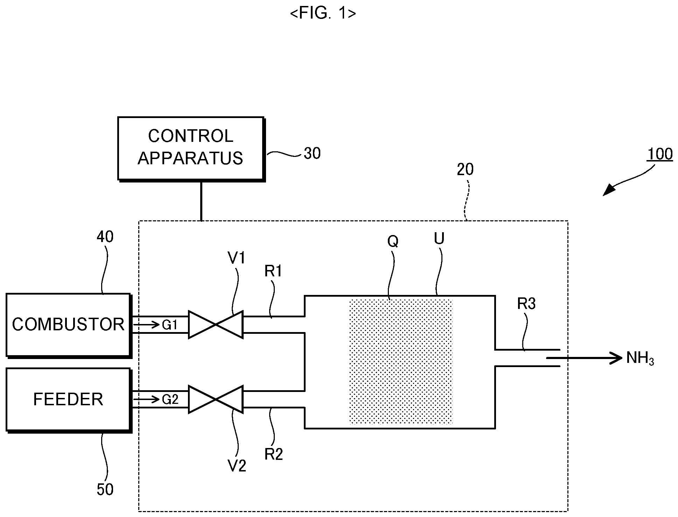

Fig. 1 is a configuration diagram illustrating a production unit 100 configured to produce ammonia according to a first embodiment. The production unit 100 includes a production apparatus 20 and a control apparatus 30 configured to control the production apparatus 20.

The production apparatus 20 is an apparatus that generates ammonia from NOx (for example, NO, NO₂, N₂O, and N₂O₃) in a gas. Schematically, the production apparatus 20 performs the process of supplying a source gas G1 containing NOx to a catalyst material Q, then stopping the supply of the source gas G1, and supplying a reducing gas G2 to the catalyst material Q to produce ammonia (hereinafter referred to as "production process").

The catalyst material Q is a catalyst that stores and reduces NOx in the source gas G1. Details of the catalyst material Q will be described later.

The source gas G1 is a gas containing NOx and oxygen. For example, the exhaust gas is suitably used as the source gas G1. The exhaust gas is a gas discharged from various facilities (for example, a high-temperature combustion facility such as a waste incineration facility or a thermal power plant, and a factory). The concentration of NOx in the source gas G1 is, for example, 100 ppm to 2%. The concentration of oxygen in the source gas G1 is, for example, 1 to 20%. The source gas G1 may contain CO₂, water vapor, nitrogen, and the like in addition to NOx and oxygen.

The reducing gas G2 is a gas that reduces NOx stored (adsorbed) by the catalyst material Q. Specifically, the reducing gas G2 is a gas containing a reducing agent and not containing NOx. The state in which the reducing gas G2 does not contain NOx also includes a case in which NOx is contained at an extremely low concentration (for example, 10 ppm or less) within a range not affecting the reduction of NOx stored (adsorbed) in the catalyst material Q and not affecting the environmental aspect. However, the reducing gas G2 that does not completely contain NOx (the concentration of NOx is 0%) is suitably used. The reducing agent is preferably any one or more of H₂, C₃H₆, C₃H₈, and CH₄ from the viewpoint of improving the production efficiency of ammonia. From the viewpoint of stably producing ammonia, the reducing gas G2 is preferably not a gas produced from the source gas G1.

The concentration of the reducing agent in the reducing gas G2 is, for example, 100 ppm to 50%, preferably 500 ppm to 20%, and more preferably 1000 ppm to 5%. The reducing gas G2 may contain water vapor, nitrogen, and the like in addition to the reducing agent.

As illustrated in Fig. 1, the production apparatus 20 of the first embodiment includes a reaction tube U, a first supply path R1, a second supply path R2, a first on-off valve V1, a second on-off valve V2, and a recovery path R3.

The reaction tube U is a hollow structure in which the catalyst material Q is housed.

The first supply path R1 is a flow path for supplying the source gas G1 to the catalyst material Q (reaction tube U). Specifically, the first supply path R1 is a tubular member, and the downstream side thereof is connected to the reaction tube U. The upstream side of the first supply path R1 is connected to, for example, a combustor 40 that discharges exhaust gas to be the source gas G1. The upstream side of the first supply path R1 may be directly connected to the combustor 40 as long as the source gas G1 can be supplied to the reaction tube U, or may be indirectly connected to the combustor 40 via another tube or apparatus.

The second supply path R2 is a flow path for supplying the reducing gas G2 to the catalyst material Q (reaction tube U). Specifically, the second supply path R2 is a tubular member, and the downstream side thereof is connected to the reaction tube U. To the upstream side of the second supply path R2, for example, a feeder 50 with the reducing gas G2 housed is connected. The upstream side of the second supply path R2 may be directly connected to the feeder 50 as long as the reducing gas G2 can be supplied to the reaction tube U, or may be indirectly connected to the feeder 50 via another tube or apparatus.

As understood from the above explanation, in the first embodiment, the source gas G1 and the reducing gas G2 are supplied from independent mechanisms (the combustor 40 and the feeder 50). In other words, the source gas G1 and the reducing gas G2 are supplied from different sources.

The first on-off valve V1 is a valve that opens and closes the first supply path R1. That is, the opening and closing of the first supply path R1 are switched by the first on-off valve V1. When the source gas G1 is supplied to the reaction tube U, the first on-off valve V1 is opened. On the other hand, when the reducing gas G2 is supplied to the reaction tube U, the first on-off valve V1 is closed.

The second on-off valve V2 is a valve that opens and closes the second supply path R2. That is, the opening and closing of the second supply path R2 are switched by the second on-off valve V2. When the reducing gas G2 is supplied to the reaction tube U, the second on-off valve V2 is opened. On the other hand, when the source gas G1 is supplied to the reaction tube U, the second on-off valve V2 is closed. In Fig. 1, a case where both the first on-off valve V1 and the second on-off valve V2 are in an open state is illustrated for convenience.

The recovery path R3 is a flow path configured to recover ammonia produced in the reaction tube U. Specifically, the recovery path R3 is a tubular member, and the upstream side thereof is connected to the reaction tube U. An on-off valve may be provided in the recovery path R3. Ammonia produced in the reaction tube U is discharged from the recovery path R3.

For example, it is assumed that ammonia released from the recovery path R3 is directly supplied to a reaction tube containing an optional catalyst therein and used for a predetermined reaction, or is recovered by being adsorbed by an adsorbent disposed at a subsequent stage.

The control apparatus 30 is a computer system configured to comprehensively control each element of the production apparatus 20, and includes, for example, a single or a plurality of processors (for example, a central processing unit (CPU)) that controls each element of the production apparatus 20.

Specifically, the control apparatus 30 controls the supply of the source gas G1 and the reducing gas G2 to make the production apparatus 20 perform the production process. The control apparatus 30 of the first embodiment switches the opening and closing of the first on-off valve V1 to control the supply of the source gas G1, and switches the opening and closing of the second on-off valve V2 to control the supply of the reducing gas G2.

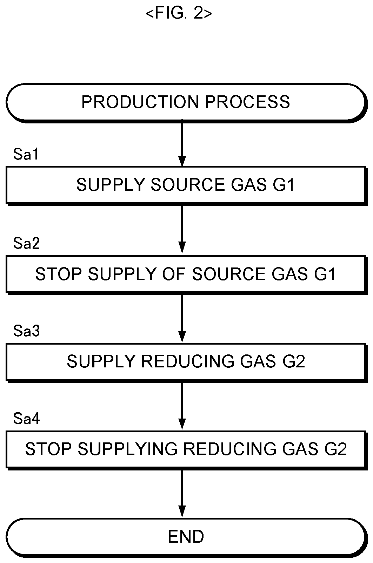

Hereinafter, a specific process of the production process performed by the production apparatus 20 under the control of the control apparatus 30 will be described. Fig. 2 is a flowchart illustrating a production process.

When the production process is started, first, the production apparatus 20 supplies the source gas G1 to the catalyst material Q (reaction tube U) (Sa1). Specifically, the production apparatus 20 opens the first on-off valve V1 under the control of the control apparatus 30 to supply the source gas G1 to the catalyst material Q via the first supply path R1. When the source gas G1 is supplied, the second on-off valve V2 is closed.

The source gas G1 is supplied to the catalyst material Q (reaction tube U) over a predetermined period (for example, 5 minutes to 2 hours). Supplying the source gas G1 to the catalyst material Q causes NOx to be stored (adsorbed) in the catalyst material Q as NO₂⁻ or NO₃⁻. In the source gas G1 (hereinafter referred to as "source gas G1e used") after being supplied to the catalyst material Q, the concentration of NOx decreases. The source gas G1e used is released through, for example, the recovery path R3.

After causing the catalyst material Q to store NOx, the production apparatus 20 stops the supply of the source gas G1 (Sa2). Specifically, the production apparatus 20 closes the first on-off valve V1 under the control of the control apparatus 30 to stop the supply of the source gas G1.

Then, the production apparatus 20 supplies the reducing gas G2 to the catalyst material Q (reaction tube U) (Sa3). Specifically, the production apparatus 20 opens the second on-off valve V2 under the control of the control apparatus 30 to supply the reducing gas G2 to the catalyst material Q.

The reducing gas G2 is supplied to the catalyst material Q (reaction tube U) over a predetermined period (for example, 5 minutes to 2 hours). The reducing gas G2 is supplied to the catalyst material Q with NOx stored, thereby proceeding reduction of NOx and producing ammonia. The produced ammonia is recovered from the recovery path R3.

The production apparatus 20 then stops the supply of the reducing gas G2 (Sa4). Specifically, the production apparatus 20 closes the second on-off valve V2 under the control of the control apparatus 30 to stop the supply of the reducing gas G2.

Ammonia is produced by the above production process. The production process of Fig. 2 may be repeatedly performed. That is, after the supply of the reducing gas G2 is stopped in step Sa4, the process returns to the process of supplying the source gas G1 in step Sa1.

The production process performed by the production apparatus 20 can also be conceived as a method for producing ammonia (hereinafter referred to as "production method"). Specifically, the production method includes: a first step (step Sa1 in Fig. 2) of supplying the source gas G1 (exhaust gas) to the catalyst material Q (reaction tube U) to store NOx in the source gas G1 in the catalyst material Q; and a second step of stopping supply of the source gas G1 and then supplying the reducing gas G2 to the catalyst material Q to produce and recover ammonia from NOx stored in the catalyst material Q (step Sa3 in Fig. 2).

In the production method according to the first embodiment, at least one of the temperature of the source gas G1 and the reducing gas G2 supplied to the catalyst material Q and the temperature of the catalyst material Q is set to 150 to 500°C, preferably set to 200 to 400°C. At least one of the temperature of the source gas G1 and the reducing gas G2 supplied to the catalyst material Q and the temperature of the catalyst material Q is set to the above temperature range, thereby allowing to improve the production efficiency of ammonia.

As understood from the above explanation, the production apparatus 20 (production method) of the first embodiment supplies the source gas G1 to the catalyst material Q, then stops the supply of the source gas G1, and supplies the reducing gas G2 to the catalyst material Q to produce and recover ammonia. That is, the source gas G1 and the produced ammonia do not coexist in the reaction tube U, and thus it is possible to recover ammonia as a resource.

Herein, in the configuration in which the reducing gas (for example, H₂) obtained from the exhaust gas (source gas) is used in the production of ammonia (for example, Patent Literatures 1 to 5), the production of the reducing gas depends on various coexisting gases (for example, O₂, H₂O, CO₂, CO, HC) in the exhaust gas. The concentration of the coexisting gas is not always constant. Therefore, there is also a problem in that the coexisting gas in the exhaust gas affects the production of ammonia. As a result, ammonia cannot be stably produced.

On the other hand, in the first embodiment, the reducing gas G2 (the reducing gas G2 not produced from the source gas G1) independent of the source gas G1 is used, and thus it is possible to reduce the influence of the coexisting gas in the source gas G1 and to produce and recover ammonia from NOx.

A gas other than the exhaust gas may be used as the source gas G1. The type of the source gas G1 is optional as long as NOx and oxygen are contained.

### [Second embodiment]

A second embodiment will be described. In the following examples, elements having functions similar to those of the first embodiment are denoted by the reference numerals used in the description of the first embodiment, and the detailed explanation thereof is appropriately omitted.

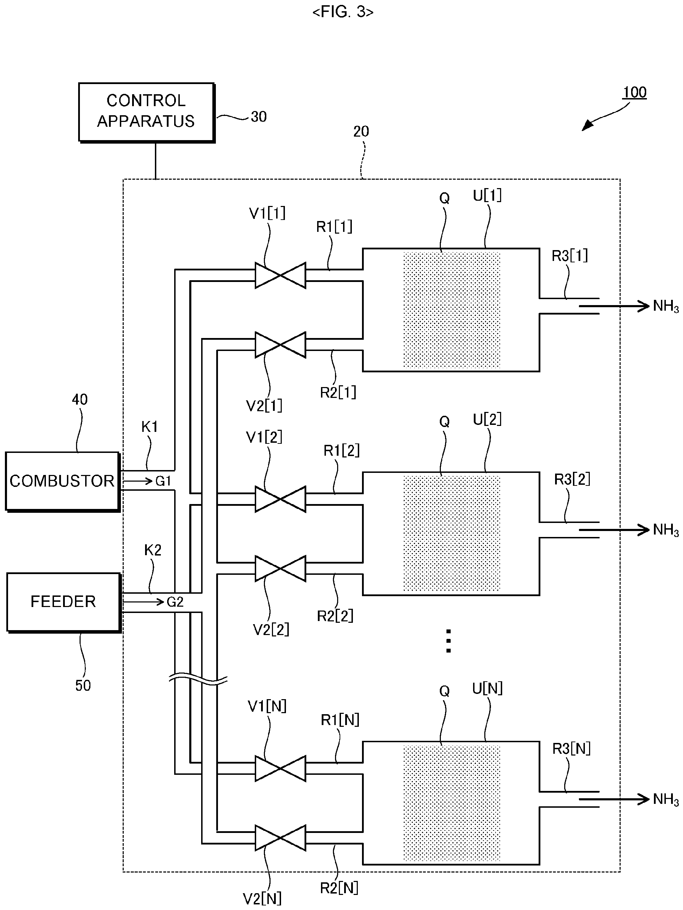

Fig. 3 is a configuration diagram of the production unit 100 according to the second embodiment. The production unit 100 according to the second embodiment includes the production apparatus 20 and the control apparatus 30 as in the first embodiment.

The first embodiment exemplifies the configuration in which the production apparatus 20 includes one reaction tube U, but the second embodiment exemplifies a configuration in which the production apparatus 20 includes N (N is a natural number of two or more) reaction tubes U [1] to U [N].

The production apparatus 20 of the second embodiment includes a first supply path R1 [n], a second supply path R2 [n], a first on-off valve V1 [n], a second on-off valve V2 [n], and a recovery path R3 [n] for each of the reaction tubes U [n] (n = 1 to N). That is, the production apparatus 20 includes N reaction tubes U [1] to U [N], N first supply paths R1 [1] to R1 [N], N second supply paths R2 [1] to R2 [N], N first on-off valves V1 [1] to V1 [N], N second on-off valves V2 [1] to V2 [N], and N recovery paths R3 [1] to R3 [N].

The upstream side (the side opposite to the reaction tube U) of the N first supply paths R1 [1] to R1 [N] is connected to the combustor 40 via the first common path K1. In other words, the N first supply paths R1 [1] to R1 [N] are flow paths branching from the first common path K1 toward the N reaction tubes U [1] to U [N]. The upstream side of the first common path K1 is connected to the combustor 40. The source gas G1 is supplied to each of the N first supply paths R1 [1] to R1 [N] via the first common path K1.

The upstream side (the side opposite to the reaction tube U) of the N second supply paths R2 [1] to R2 [N] is connected to the combustor 40 via the second common path K2. In other words, the N second supply paths R2 [1] to R2 [N] are flow paths branching from the second common path K2 toward the N reaction tubes U [1] to U [N]. The upstream side of the second common path K2 is connected to the feeder 50. The reducing gas G2 is supplied to each of the N second supply paths R2 [1] to R2 [N] via the second common path K2. An on-off valve may be provided in each of the first common path K1 and the second common path K2.

The production apparatus 20 of the second embodiment performs the same production process as that of the first embodiment for each of the N reaction tubes U [1] to U [N]. In the second embodiment, the production process (the process of Sa1 to Sa4 in Fig. 2) is repeatedly performed for each reaction tube U [n].

When step Sa1 (first step) of supplying the source gas G1 to the reaction tube U [n] is performed, the first on-off valve V1 [n] is opened and the second on-off valve V2 [n] is closed. When step Sa3 (second step) of supplying the reducing gas G2 to the reaction tube U [n] is performed, the first on-off valve V1 [n] is closed and the second on-off valve V2 [n] is opened.

Hereinafter, the N reaction tubes U [1] to U [N] will be described while divided into K (K is a natural number less than N) reaction tubes U and (N - K) reaction tubes U. The K reaction tubes U and the (N - K) reaction tubes U are different from each other in timing of performing each step of the production process.

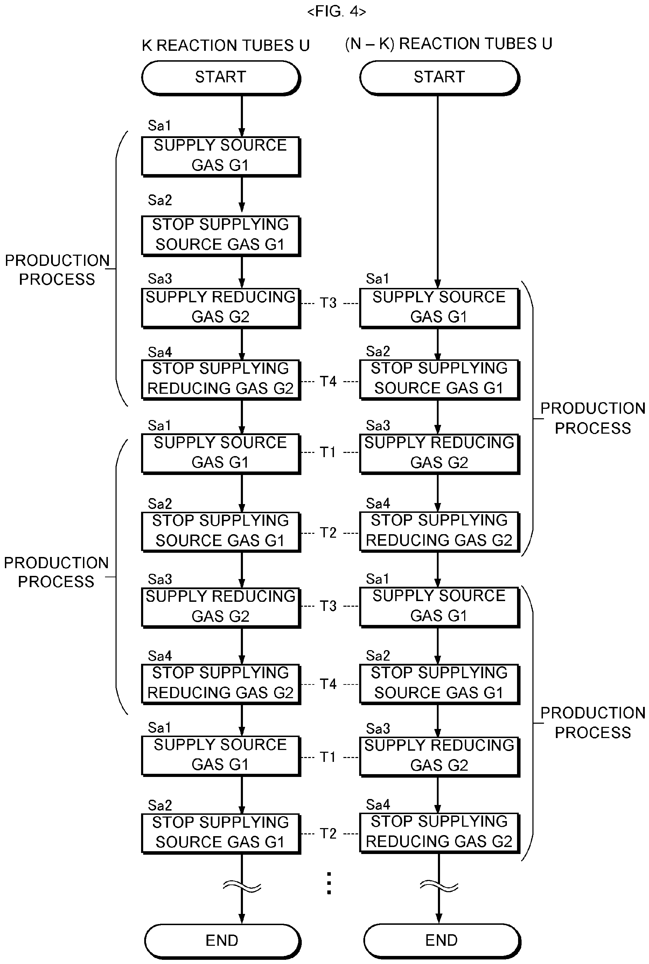

Fig. 4 is a flowchart illustrating a production process repeatedly performed by the production apparatus 20 according to the second embodiment for the K reaction tubes U and the (N - K) reaction tubes U. Fig. 4 illustrates a time series of the unit periods T1 to T4 for convenience. The unit periods T1 to T4 are repeated in the order of "T1 → T2 → T3 → T4 →...". T1 and T3, which are periods during which a gas (G1, G2) is supplied, are, for example, 1 minute to 3 hours, preferably 5 minutes to 2 hours. T2 and T4 are short times required to stop and switch the gases.

As illustrated in Fig. 4, in the unit period T1, step Sa1 of supplying the source gas G1 to the catalyst material Q (reaction tubes U) is performed for the K reaction tubes U, and step Sa3 of supplying the reducing gas G2 to the catalyst material Q (reaction tubes U) is performed for the (N - K) reaction tubes U. That is, step Sa3 for the (N - K) reaction tubes U is performed in parallel with performing step Sa1 for the K reaction tubes U.

In the unit period T2, step Sa2 of stopping the supply of the source gas G1 is performed, and step Sa4 of stopping the supply of the reducing gas G2 is performed for the (N - K) reaction tubes U.

In the unit period T3, step Sa3 of supplying the reducing gas G2 to the catalyst material Q (reaction tubes U) is performed for the K reaction tubes U, and step Sa1 of supplying the source gas G1 to the catalyst material Q (reaction tubes U) is performed for the (N - K) reaction tubes U. That is, step Sa1 for the (N - K) reaction tubes U is performed in parallel with performing step Sa3 for the K reaction tubes U.

In the unit period T4, step Sa4 of stopping the supply of the reducing gas G2 is performed, and step Sa2 of stopping the supply of the source gas G1 is performed for the (N - K) reaction tubes U.

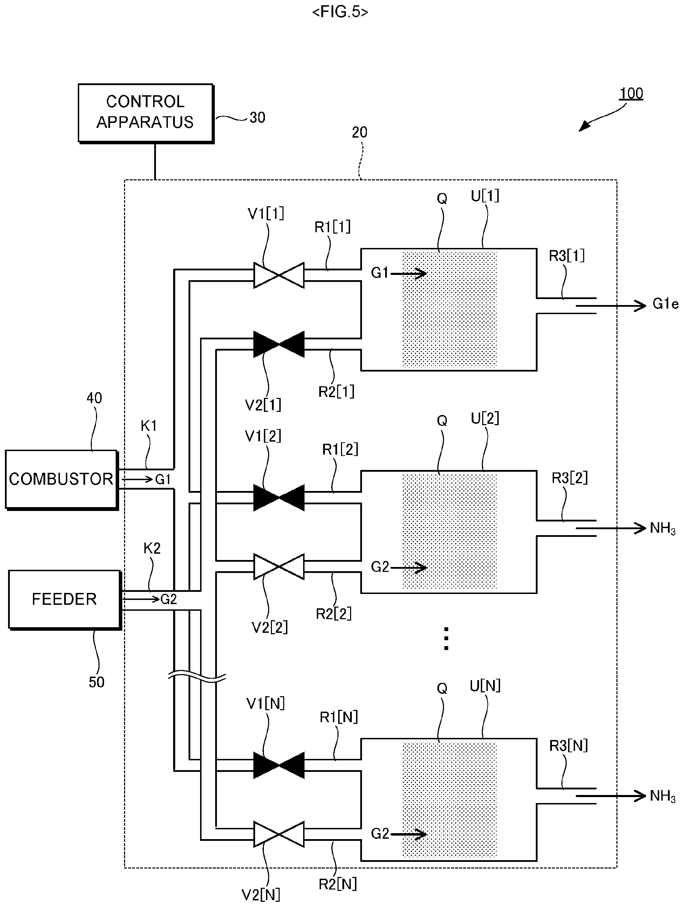

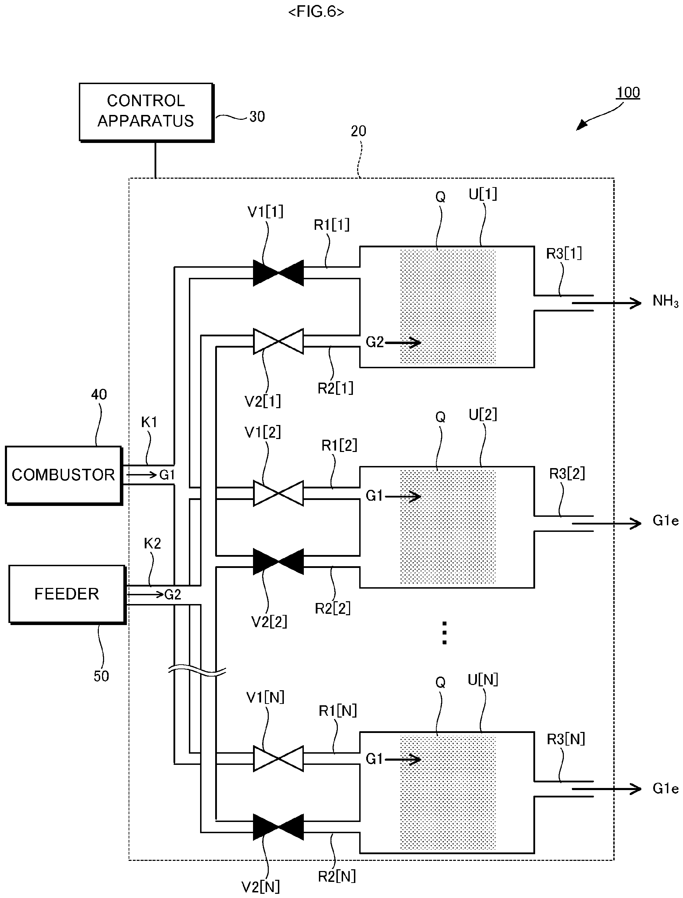

Hereinafter, operations in the unit period T1 and the unit period T3 in the production apparatus 20 will be described. Fig. 5 illustrates a state of the production apparatus 20 in the unit period T1, and Fig. 6 illustrates a state of the production apparatus 20 in the unit period T3.

Figs. 5 and 6 illustrate a case where K is 1. Specifically, a case where K (one) reaction tube U is the reaction tube U [1] and (N - K) reaction tubes U are the reaction tubes U [2] to U [N] other than the reaction tube U [1] will be exemplified.

As illustrated in Fig. 5, in the unit period T1, for the reaction tube U [1], the first on-off valve V1 [1] is opened, and the second on-off valve V2 [1] is closed. Therefore, the source gas G1 is supplied from the first supply path R1 [1] to the reaction tube U [1], and the source gas G1e used is recovered from the recovery path R3 [1].

On the other hand, for the reaction tubes U [2] to U [N], the first on-off valves V1 [2] to R1 [N] are closed, and the second on-off valves V2 [2] to R2 [N] are opened. Therefore, the reducing gas G2 is supplied from the second supply paths R2 [2] to R2 [N] to the reaction tubes U [2] to U [N], and ammonia is recovered from the recovery paths R3 [2] to R3 [N].

As illustrated in Fig. 6, in the unit period T3, for the reaction tube U [1], the first on-off valve V1 [1] is closed, and the second on-off valve V2 [1] is opened. Therefore, the reducing gas G2 is supplied from the second supply path R2 [1] to the reaction tube U [1], and ammonia is recovered from the recovery path R3 [1].

On the other hand, for the reaction tubes U [2] to U [N], the first on-off valves V1 [2] to V1 [N] are opened, and the second on-off valves V2 [2] to V2 [N] are closed. Therefore, the source gas G1 is supplied from the first supply paths R1 [2] to R1 [N] to the reaction tubes U [2] to U [N], and the source gas G1e used is exhausted from the recovery paths R3 [2] to R3 [N].

The control apparatus 30 of the second embodiment comprehensively controls the production apparatus 20 to make the production apparatus 20 perform the above-described production process for each of the N reaction tubes U [1] to U [N]. The opening and closing of the first on-off valve V1 [n] and the second on-off valve V2 [n] are switched under the control of the control apparatus 30.

Also in the second embodiment, effects similar to those of the first embodiment are achieved.

Herein, there is assumed a configuration (hereinafter, referred to as a "reference example") in which steps Sa1 to Sa4 of the production process are simultaneously performed over the N reaction tubes U [1] to U [N]. In the reference example, it is necessary to stop the supply of the exhaust gas to the entire production apparatus 20 while performing step Sa3 of supplying the reducing gas G2. However, when the exhaust gas discharged from the combustor 40 is used as the source gas G1, there is a circumstance that the generation of the exhaust gas cannot be stopped while the combustor 40 operates. Therefore, the reference example is not suitable when the exhaust gas is used as the source gas G1.

On the other hand, with the production apparatus 20 of the second embodiment, there is one or more reaction tubes U to which the source gas G1 is supplied among N reaction tubes U [1] to U [N]. That is, there is an advantage that ammonia can be produced without stopping the supply of the source gas G1 to the entire production apparatus 20. The configuration of the second embodiment is particularly suitable when the exhaust gas is used as the source gas G1. However, the present invention also includes reference examples.

In addition, the production apparatus 20 of the second embodiment includes the N reaction tubes U [1] to U [N], and thus it is possible to sequentially introduce the reducing gas G2 from the reaction tube U in which the storage capability of the catalyst material Q becomes insufficient to generate ammonia and recover the storage capability. Therefore, the catalyst material Q can be repeatedly used. As a result, the production apparatus 20 can be operated without leaking NOx to the subsequent stage.

The production method according to the second embodiment is represented as a method that repeatedly performs the production process including: the first step (step Sa1) of supplying the source gas G1 (exhaust gas) to the reaction tube U [n] for each of the N reaction tubes U to cause NOx in the source gas G1 to be stored in the catalyst material Q; and the second step (step Sa3) of stopping the supply of the source gas G1 and then supplying the reducing gas G2 to the reaction tube U [n] to produce and recover ammonia from NOx stored in the catalyst material Q, wherein the second step for the (N - K) reaction tubes U is performed while the first step is performed for the K reaction tubes U, and the first step for the (N - K) reaction tubes U is performed while performing the second step for the K reaction tubes U.

The configuration of the production apparatus 20 according to the second embodiment is not limited to the above example as long as the above-described production method can be performed. In addition, the reaction tube U divided into K pieces and the reaction tube U divided into (N - K) pieces may be different for each production process.

### [Third embodiment]

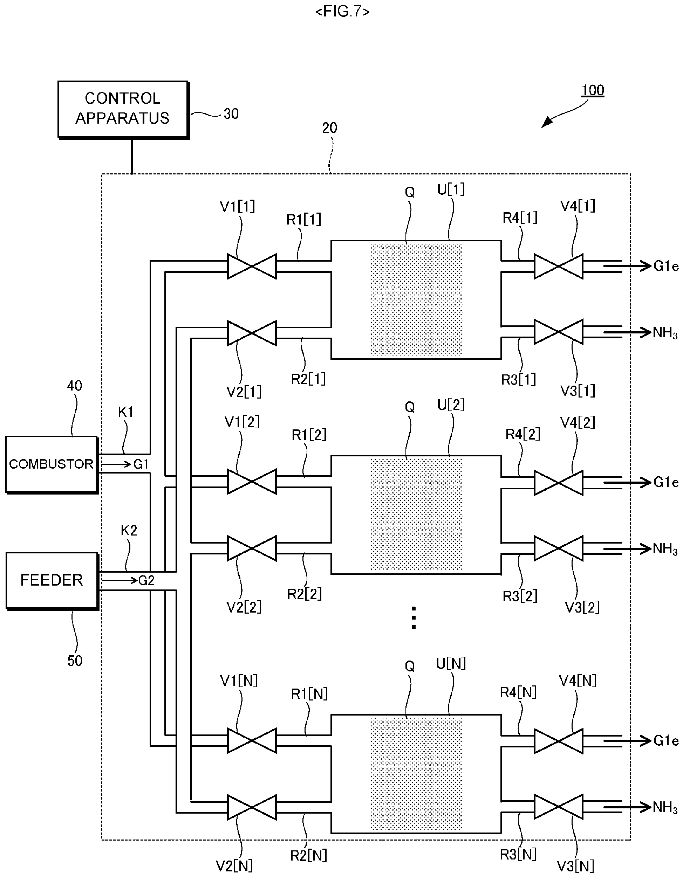

Fig. 7 is a configuration diagram of the production unit 100 according to a third embodiment. The production unit 100 according to the third embodiment includes the production apparatus 20 and the control apparatus 30 as in the second embodiment.

As in the second embodiment, the production apparatus 20 of the third embodiment includes, for each reaction tube U [n], the first supply path R1 [n], the second supply path R2 [n], the first on-off valve V1 [n], the second on-off valve V2 [n], and the recovery path R3 [n], and further includes an exhaust path R4 [n], a third on-off valve V3 [n], and a fourth on-off valve V4 [n]. That is, the production apparatus 20 of the third embodiment has a configuration in which N exhaust paths R4 [1] to R4 [N], N third on-off valves V3 [1] to V3 [N], and N fourth on-off valves V4 [1] to V4 [N] are added to the production apparatus 20 of the second embodiment.

The exhaust path R4 [n] is a flow path configured to recover the source gas G1 from the reaction tube U [n]. The source gas G1e used after passing through the catalyst material Q is recovered from the exhaust path R4 [n]. Specifically, the exhaust path R4 [n] is a tubular member, and the upstream side thereof is connected to the reaction tube U [n].

The third on-off valve V3 [n] is a valve that opens and closes the recovery path R3 [n]. That is, the third on-off valve V3 [n] switches the opening and closing of the recovery path R3 [n]. When the source gas G1 is supplied to the reaction tube U [n], the third on-off valve V3 [n] is closed, and when the reducing gas G2 is supplied to the reaction tube U [n], the third on-off valve V3 [n] is opened.

The fourth on-off valve V4 [n] is a valve that opens and closes the exhaust path R4 [n]. That is, the opening and closing of the exhaust path R4 are switched by the fourth on-off valve V4 [n]. When the source gas G1 is supplied to the reaction tube U [n], the fourth on-off valve V4 [n] is opened, and when the reducing gas G2 is supplied to the reaction tube U [n], the fourth on-off valve V4 [n] is closed.

The opening and closing of the third on-off valve V3 [n] and the fourth on-off valve V4 [n] are switched under the control of the control apparatus 30.

As understood from the above description, in the third embodiment, the third on-off valve V3 [n] is closed and the fourth on-off valve V4 [n] is opened when step Sa1 (first process) of Fig. 4 is performed for the reaction tube U [n], and the third on-off valve V3 [n] is opened and the fourth on-off valve V4 [n] is closed when step Sa3 (second process) of Fig. 4 is performed for the reaction tube U [n].

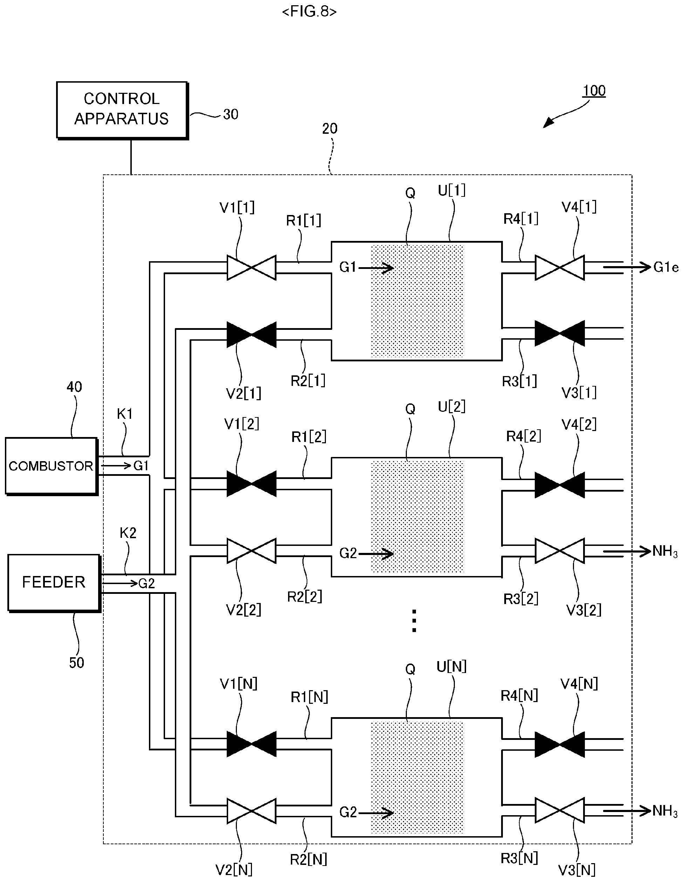

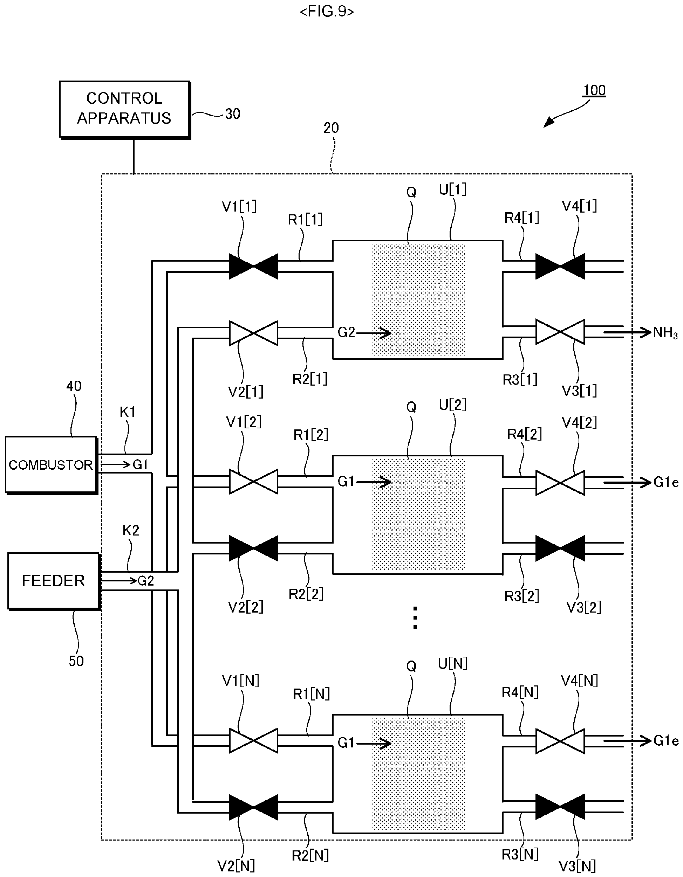

Hereinafter, the operation of the production apparatus 20 according to the third embodiment in the unit period T1 and the unit period T3 in Fig. 4 will be described. Fig. 8 illustrates a state of the production apparatus 20 in the unit period T1, and Fig. 9 illustrates a state of the production apparatus 20 in the unit period T3.

Similarly to Figs. 5 and 6, Figs. 8 and 9 also illustrate a case where K (one) reaction tube U is used as the reaction tube U [1] and (N - K) reaction tubes U are used as the reaction tubes U [2] to U [N] other than the reaction tube U [1].

As illustrated in Fig. 8, in the unit period T1, as in the second embodiment, in the reaction tube U [1], the first on-off valve V1 [1] is opened, and the second on-off valve V2 [1] is closed. Therefore, the source gas G1 is supplied from the first supply path R1 [1] to the reaction tube U [1].

Further, in the unit period T1 of the third embodiment, in the reaction tube U [1], the fourth on-off valve V4 [1] is opened, and the third on-off valve V3 [1] is closed. That is, the source gas G1 is supplied to the reaction tube U [1], and the source gas G1e used is released from the exhaust path R4 [1].

On the other hand, for the reaction tubes U [2] to U [N], similarly to the second embodiment, the first on-off valves V1 [2] to V1 [N] are closed, and the second on-off valves V2 [2] to V2 [N] are opened. Therefore, the reducing gas G2 is supplied from the second supply paths R2 [2] to R2 [N] to the reaction tubes U [2] to U [N].

Further, in the unit period T1 of the third embodiment, for the reaction tubes U [2] to U [N], the fourth on-off valves V4 [2] to V4 [N] are closed, and the third on-off valves V3 [2] to V3 [N] are opened. That is, the reducing gas G2 is supplied to the reaction tubes U [2] to U [N], and ammonia is released from the recovery paths R3 [2] to R3 [N] and recovered.

As illustrated in Fig. 9, in the unit period T3, as in the second embodiment, in the reaction tube U [1], the second on-off valve V2 [1] is opened, and the first on-off valve V1 [1] is closed. Therefore, the reducing gas G2 is supplied from the second supply path R2 [1] to the reaction tube U [1].

Further, in the unit period T3 of the third embodiment, in the reaction tube U [1], the third on-off valve V3 [1] is opened, and the fourth on-off valve V4 [1] is closed. That is, the reducing gas G2 is supplied to the reaction tube U [1], and ammonia is released from the recovery path R3 [1] and recovered.

On the other hand, for the reaction tubes U [2] to U [N], similarly to the second embodiment, the second on-off valves V2 [2] to V2 [N] are closed, and the first on-off valves V1 [2] to V1 [N] are opened. Therefore, the source gas G1 is supplied from the first supply paths R1 [2] to R1 [N] to the reaction tubes U [2] to U [N].

Further, in the unit period T3 of the third embodiment, for the reaction tubes U [2] to U [N], the third on-off valves V3 [2] to V3 [N] are closed, and the fourth on-off valves V4 [2] to V4 [N] are opened. That is, the source gas G1 is supplied to the reaction tubes U [2] to U [N], and the source gas G1e used is released from the exhaust paths R4 [2] to R4 [N].

As understood from the above description, in the production apparatus 20 according to the third embodiment, the third on-off valve V3 [n] is closed and the fourth on-off valve V4 [n] is opened when the first step (step Sa1) is performed, and the third on-off valve V3 [n] is opened and the fourth on-off valve V4 [n] is closed when the second step (step Sa3) is performed.

In the third embodiment, the reaction tube U [n] includes the exhaust path R4 [n] separately from the recovery path R3 [n], and thus the source gas G1e used and ammonia can be recovered in different paths.

Also in the first embodiment, there is adopted a configuration in which the exhaust path R4 separate from the recovery path R3 is provided in the production apparatus 20.

### [Catalyst material]

Hereinafter, an example of a catalyst material suitably used in the production apparatus and the production method according to the present invention will be described in detail.

The catalyst material includes noble metal, at least one of alkali metal and alkaline earth metal, and oxide support.

Examples of the oxide support used for the catalyst material include Al₂O₃, CeO₂, TiO₂, ZrO₂, SiO₂, MgO, CaO, and LaAlO₃. Among these, any one or more of Al₂O₃, CeO₂, TiO₂, and ZrO₂ is preferable from the viewpoint of improving the catalytic activity.

The noble metal is contained in the catalyst material in a state of being supported on the surface of the oxide support or in a state of being contained inside the oxide support. Herein, the state of being contained inside the oxide support refers to a state in which a particulate noble metal is contained and complexed inside the spherical particles of the oxide support.

In the present invention, the noble metal may be contained in the oxide support as noble metal alone, or may be contained in the oxide support as noble metal compound containing the noble metal, or is contained in a manner of both cases described above. In the following description, the term "noble metal" includes both noble metal alone and noble metal in noble metal compound.

The noble metal (noble metal alone) contained in the oxide support is one or more of gold, silver, platinum, palladium, rhodium, iridium, ruthenium, osmium, and rhenium. When the noble metal is contained in the oxide support as noble metal compound, the noble metal compound is noble metal alone or oxide thereof. From the viewpoint of improving the catalytic activity, one or more noble metals of platinum, palladium, rhodium, and iridium are suitable, and one or more noble metals of platinum and rhodium are more suitable. A plurality of types of noble metals may be contained in the oxide support.

The average particle size of the noble metal is, for example, 0.1 to 100 nm, preferably 10 to 50 nm. Setting the average particle sizes of the noble metal and the noble metal compound within the above range can achieve both the oxidation reaction properties of the gas to be flowed and the durability of the catalyst.

The average particle size of the noble metal is a mode (mode size) specified by measuring the particle size of a predetermined number (for example, 100) of particles by observation with a transmission electron microscope.

The content of the noble metal (noble metal element in the catalyst material) is 0.01 to 20 mass%, preferably 0.05 to 15.0 mass%, and more preferably 0.1 to 10.0 mass% in the entire catalyst material. Setting the content of the noble metal within the above range can improve the catalytic activity. In addition, the amount of expensive noble metal used can be suppressed.

The alkali metal and the alkaline earth metal are contained in the catalyst material in a state of being supported on the surface of the oxide support. When the noble metal is contained inside the oxide support, alkali metal and alkaline earth metal are supported on the surface of the oxide support complexed with the noble metal.

In the present invention, the alkali metal and the alkaline earth metal are typically supported on the oxide support as a compound containing at least one of alkali metal and alkaline earth metal (hereinafter referred to as "alkali metal/alkaline earth metal compound"). However, from the present invention, there is not excluded the configuration in which the alkali metal alone and the alkaline earth metal alone are supported on the oxide support.

Examples of the alkali metal/alkaline earth metal compound supported on the oxide support include oxides, peroxides, carbonates, and hydroxides of alkali metals and alkaline earth metals.

When the alkali metal/alkaline earth metal compound contains a plurality of types from alkali metals and alkaline earth metals, two or more types may be selected from only alkali metals, two or more types may be selected from only alkaline earth metals, or one or more types may be selected from alkali metals and one or more types may be selected from alkaline earth metals. One type of the alkali metal/alkaline earth metal compound may be supported on the oxide support, or a plurality of types thereof may be supported on the oxide support.

The alkali metal used in the alkali metal/alkaline earth metal compound is one or more of lithium, sodium, potassium, rubidium, cesium, and francium. From the viewpoint of improving the reduction efficiency of the nitrogen oxide, one or more of lithium, potassium, sodium, and cesium are preferable, and one or more of potassium and sodium are more preferable.

The alkaline earth metal used in the alkali metal/alkaline earth metal compound is one or more of beryllium, magnesium, calcium, strontium, barium, and radium. From the viewpoint of improving the reduction efficiency of nitrogen oxides, one or more of magnesium, calcium, strontium, and barium are preferable, and one or more of calcium and barium are more preferable.

The content (total amount) of the alkali metal and the alkaline earth metal (the alkali metal element and the alkaline earth metal element in the catalyst material) is 0.1 to 50.0 mass%, preferably 0.5 to 40.0 mass%, and more preferably 1.0 to 30.0 mass% in the entire catalyst material. Setting the contents of the alkali metal and the alkaline earth metal within the above ranges can improve the reduction efficiency of the nitrogen oxide while maintaining the uniformly disposed pore structure.

The specific surface area of the catalyst material is, for example, 10 to 350 m²/g, preferably 50 to 330 m²/g, and more preferably 150 to 300 m²/g. The catalyst material having a specific surface area within the above range, for example, can adsorb gas (for example, nitrogen oxide) with high efficiency. The specific surface area of the catalyst material is measured by a BET multipoint method.

The mode of the pore size distribution of the catalyst material is, for example, a diameter of 1 to 200 nm, preferably a diameter of 1 to 50 nm, and more preferably a diameter of 2 to 20 nm. With the catalyst material in which the mode of the pore size distribution is within the above range, for example, gas (for example, nitrogen oxide) can be adsorbed with high efficiency.

The pore volume of the catalyst material is, for example, 0.1 to 1.5 cm³/g, preferably 0.3 to 1.2 cm³/g, and more preferably 0.5 to 0.9 cm³/g. With the catalyst material having the average pore size and the pore volume within the above ranges, for example, gas (for example, nitrogen oxide) can be adsorbed with high efficiency.

The mode of the pore size distribution in the catalyst material is measured by, for example, the NLDFT method by a gas adsorption method. The pore volume of the catalyst material is similarly measured, for example, by the gas adsorption method.

Hereinafter, among catalyst materials containing noble metal, at least one of alkali metal and alkaline earth metal, and oxide support, a catalyst material according to a particularly preferred embodiment (hereinafter referred to as "composite catalyst material") will be described.

The composite catalyst material contains Al₂O₃ as an oxide support. The noble metal is contained inside Al₂O₃ (that is, complexed with Al₂O₃), and the alkali metal and alkaline earth metal are supported on Al₂O₃ containing the noble metal inside. Details (such as content) of Al₂O₃ are as described above for the oxide support. Similarly, details of the alkali metal and the alkaline earth metal are as described above.

In the following description, "Al₂O₃" is referred to as "porous alumina", and porous alumina containing noble metal therein is referred to as "noble metal-containing porous alumina".

Hereinafter, an example of a method for producing a composite catalyst material will be described. The composite catalyst material according to the present invention is generally produced by synthesizing porous alumina (oxide support) containing noble metal, followed by impregnation of alkali metal or alkaline earth metal to the oxide support.

### <1> Preparation of precursor solution

A noble metal-containing precursor solution (hereinafter, simply referred to as a "precursor solution") is a solution containing an alumina source, noble metal source, amphiphilic organic molecules, an acid, and a solvent.

The alumina source (aluminum compound) used here can be converted into transition alumina (e.g., γ-alumina, a crystal structure other than α-alumina). Specific examples of the alumina source include aluminum hydroxide, aluminum nitrate, aluminum sulfate, aluminum chloride (including a hydrate), and aluminum alkoxide, and aluminum alkoxide is preferable. Examples of the aluminum alkoxide include aluminum (tri-sec-butoxide), aluminum (tri-n-butoxide), aluminum (tri-tert-butoxide), aluminum (tri-iso-propoxide), aluminum (tri-ethoxide), and aluminum (tri-phenoxide). Among these, from the viewpoint of reactivity to hydrolysis, availability, and raw material price, aluminum chloride (including hydrate), aluminum (tri-sec-butoxide), and aluminum (tri-n-butoxide) are preferable, and aluminum (tri-sec-butoxide) is particularly preferable.

Examples of the noble metal source contained in the precursor solution includes oxides, hydroxides, chlorides, carbonates, acetates, nitrates, oxalates, phosphates, and chloride complexes of one or more of gold, silver, platinum, palladium, rhodium, iridium, ruthenium, osmium, and rhenium. From the viewpoint of improving the catalytic activity, it is preferable to use one or more noble metal sources of platinum, palladium, rhodium, and iridium.

As the platinum source, for example, there are utilized: an inorganic platinum compound such as chloroplatinic acid (including a hydrate), dinitrodiammineplatinum, hexahydroxyplatinic acid, first platinum chloride, second platinum chloride, tetraammineplatinum dichloride, potassium tetrachloroplatinate, or potassium hexachloroplatinate; and an organic platinum compound such as bis(acetylacetonato)platinum, dichloro(cyclohexane)platinum dimer, dichloro(η-ethylene) Pt dimer, dichloro(η-cycloocta-1,5-diene)platinum, tetrakis(triphenylphosphite)platinum, cis-dichlorobis(triphenylphosphine)platinum, bis(benzonitrile)dichloro platinum, trans-d-cyclohexanediamine dichloro platinum, or trans-I-cyclohexanediamine dichloro platinum. These may be used alone or in combination of two or more. Among these, platinic chloride (including a hydrate) or bis(acetylacetonato)platinum is particularly preferable from the viewpoint of solubility in a solvent at the time of preparing the precursor solution.

Examples of the palladium source include palladium chloride, palladium acetate, tetrakistriphenylphosphine palladium, tris (dibenzylideneacetone) dipalladium, and allylpalladium chloride dimer. Examples of the ligand include bis[2-(diphenylphosphino)phenyl]ether (DPEphos), triphenylphosphine, 1,1'-bis(diphenylphosphino)ferrocene (dppf), 4,5'-bis(diphenylphosphino)-9,9'-dimethylxanthene (Xantphos), and 1,3-di-tert-butylimidazolium. These may be used alone or in combination of two or more.

Examples of the rhodium source include rhodium chloride, dirhodium tetraacetate dihydrate, rhodium acetate, rhodium isobutyrate, rhodium 2-ethylhexanoate, rhodium benzoate, and rhodium octoate. These may be used alone or in combination of two or more.

Examples of the iridium source include iridium chloride, iridium sulfate, iridium nitrate, iridium nitrite, ammonium hexachloroiridium acid, hexachloroiridium acid n-hydrate, chlorocarbonylbis(triphenylphosphine)iridium, and sodium chloride iridium n-hydrate. These may be used alone or in combination of two or more.

As the amphiphilic organic molecules used in the precursor solution, there can be used one or more of a polyethylene oxide-polypropylene oxide-polyethylene oxide block copolymer (trade name: Pluronic (registered trademark)), an alkyl ammonium salt, a polystyrene-polyethylene oxide block copolymer, and the like. Among these, from the viewpoint of forming a regularly disposed porous structure, at least one of a polyethylene oxide-polypropylene oxide-polyethylene oxide block copolymer and a polystyrene-polyethylene oxide block copolymer is particularly preferable, and Pluronic P123 and F127 are further preferable.

The pore size of the porous alumina greatly changes in accordance with the type of the amphiphilic organic molecules. When a polyethylene oxide-polypropylene oxide-polyethylene oxide block copolymer is used as the amphiphilic organic molecules, the mode of the pore size distribution is 2 to 30 nm. Further, when a polystyrene-polyethylene oxide block copolymer is used as the amphiphilic organic molecules, the mode of the pore size distribution is 25 to 200 nm (reference: "The Bulletin of the Chemical Society of Japan, 2019, 92, 1859-1866", "Dalton Transactions, 2021, 50, 7191-7197").

As the acid used in the precursor solution, inorganic acids such as hydrochloric acid, sulfuric acid, and nitric acid, and organic acids such as carboxylic acid and sulfonic acid can be used. Among these, from the viewpoint of forming a regularly disposed porous structure, it is particularly preferable to contain at least one of hydrochloric acid and nitric acid.

As the solvent used for the precursor solution, alcohol, ether, water, ketone, or the like can be used. In particular, as the alcohol, various alcohols including ethanol, methanol, n-butanol, sec-butanol, tert-butanol, n-propanol, and iso-propanol can be used. Among these, ethanol is particularly preferable from the viewpoint of forming a regular porous structure by optimizing the volatilization rate of the solvent.

The content of the alumina source (aluminum compound) is 5 to 25 mass% in the precursor solution, preferably 8 to 20 mass%, and more preferably 10 to 15 mass%.

The content of the noble metal source is 0.01 to 0.20 mass% in the precursor solution, preferably 0.03 to 0.20 mass%, and more preferably 0.05 to 0.10 mass%.

The content of the amphiphilic organic molecules is 1 to 20 mass% in the precursor solution, preferably 2 to 15 mass%, and more preferably 3 to 10 mass%.

The content of the acid is 0.1 to 3.0 mass% in the precursor solution, preferably 0.3 to 2.0 mass%, and more preferably 0.5 to 1.5 mass%.

The content of the solvent is 50 to 93 mass% in the precursor solution, preferably 60 to 90 mass%, and more preferably 70 to 80 mass%.

An example of a specific preparation method of the precursor solution is described as the following (1) to (3).

(1) The amphiphilic organic molecules are added to the solvent, and then noble metal source is further added.
(2) A source of aluminum is added to the solvent to prepare a dispersion. An acid is added dropwise over a predetermined time (for example, 10 minutes or more) while stirring the dispersion. The dispersion is stirred for a predetermined time (for example, 3 hours).
(3) The dispersion of (2) is added to the solution prepared in (1) to prepare a precursor solution.

### <2> Synthesis of noble metal-containing porous alumina

An example of a method for synthesizing the noble metal-containing porous alumina is described as the following (1) and (2).
(1) A precursor (powder) of the noble metal-containing porous alumina is recovered from the precursor solution. First, the solvent and water are removed from the precursor solution by drying. The method for drying the precursor solution is not particularly limited, and examples thereof include one or a combination of two or more of any known methods such as spray drying, freeze drying, heat drying, hot air drying, vacuum drying, and natural drying. Among these, spray drying is particularly preferable from the viewpoint of productivity and reproducibility. The precursor solution is dried to recover a precursor (powder) of the noble metal-containing porous alumina.
(2) The recovered precursor is calcined to synthesize noble metal-containing porous alumina. The precursor is calcined to be porous due to removal of the amphiphilic organic molecules serving as the template of the pores, and thermal decomposition of the noble metal source and crystallization of alumina are performed. The amphiphilic organic molecules disappear, resulting in a porous structure in which pores are regularly disposed. The precursor is calcined while maintaining at a desired temperature (for example, 800 to 900°C) for a predetermined time (for example, 1 to 3 hours) under a nitrogen stream, and then further maintaining at the temperature for a predetermined time (for example, 2 to 3 hours) under an oxygen stream. It is preferable to raise the temperature stepwise (for example, at 1 to 3°C per minute) until the desired temperature is reached under a nitrogen stream.

### <3> Support of alkali metal and alkaline earth metal

At least one of alkali metal and alkaline earth metal is supported as an alkali metal/alkaline earth metal compound on the synthesized noble metal-containing porous alumina.

The alkali metal and alkaline earth metal used in the present invention are as described above.

In order to support the alkali metal and the alkaline earth metal on the noble metal-containing porous alumina, there are used compounds including acetate, nitrate, carbonate, hydroxide, halide, oxide, and hydride containing at least one of the alkali metal and the alkaline earth metal (hereinafter referred to as "precursor compound"). Among these, from the viewpoint of solubility and thermal decomposition temperature, at least one of acetate and nitrate is suitable. The precursor compound is thermally decomposed by heating to be converted into alkali metal/alkaline earth metal compound.

An example of a method for supporting alkali metal and alkaline earth metal on the noble metal-containing porous alumina is described as the following (1) to (3). For example, alkali metal and alkaline earth metal are supported on the noble metal-containing porous alumina by an impregnation and support method.
(1) The noble metal-containing porous alumina is dispersed in distilled water, and an aqueous solution of the precursor compound is added dropwise while vigorously stirring.
   The aqueous solution of the precursor compound is added dropwise so that the content of the alkali metal and alkaline earth metal elements in the composite catalyst material is, for example, 0.1 to 50 mass%, preferably 0.5 to 40 mass%, and more preferably 1 to 30 mass%,. An aqueous solution of the precursor compound is added dropwise so that the mass ratio between alumina and the alkali metal/alkaline earth metal compound in the noble metal-containing porous alumina is within the above range, thereby allowing to improve the storage properties and reduction efficiency of the nitrogen oxide.
(2) The dispersion of (1) is heated under reduced pressure to remove distilled water, thereby providing a powder. For example, distilled water is removed from the dispersion by vacuum distillation at 30 to 80°C.
(3) The powder obtained in (2) is dried and then calcined to provide the composite catalyst material according to the present invention. The powder obtained in (2) is dried, for example, at 80 to 120°C for 6 to 20 hours. The dried powder is calcined, for example, at 400 to 700°C for 2 to 5 hours in a tubular furnace.

A composite catalyst material is produced by the above production method. The production method according to the present invention has an advantage that a composite catalyst material can be produced with high productivity in a short period of time as compared with, for example, a method in which a precursor solution is developed in a container such as a petri dish and dried at a predetermined temperature for several days.

The composite catalyst material is produced by the above production method, causing the mode in the pore size distribution to be 1 to 200 nm in diameter. With the composite catalyst material in which the mode in the pore size distribution is 1 to 200 nm in diameter, diffusion and storage of nitrogen oxides in the gas phase can proceed without delay. Further, the pore size distribution of the composite catalyst material can be controlled in accordance with the type of the amphiphilic organic molecules to be selected and the synthesis conditions, and the balance between the diffusion of the nitrogen oxide in the pores and the specific surface area of the composite catalyst material can also be adjusted.

In the composite catalyst material according to the present invention, supporting at least one of alkali metal and alkaline earth metal on noble metal-containing porous alumina can improve the reduction efficiency of nitrogen oxides while improving the adsorption amount of nitrogen oxides.

The composite catalyst material according to the present invention can maintain a regularly disposed pore structure. Therefore, the specific surface area can be maintained at a high level.

In the composite catalyst material produced by the above production method, there is observed at least one of a diffraction peak and a scattering peak corresponding to a lattice spacing of 1 to 200 nm obtained by X-ray irradiation. The diffraction peak is measured by an X-ray diffraction method. The scattering peak is measured by a small-angle X-ray scattering method. Specifically, one or more diffraction peaks corresponding to a lattice spacing of 1 to 200 nm are observed in the measurement by the X-ray diffraction method, and one or more scattering peaks corresponding to a lattice spacing of 1 to 200 nm are observed in the measurement by the small-angle X-ray scattering method.

As the tube that generates the X-ray, it is desirable to use Fe because the wavelength of the characteristic X-ray is long, the diffraction peak or the scattering peak appears on the high angle side, and thus the detection is easy, and the intensity is sufficient for the detector. However, there is no problem even in the tube using other elements (for example, Cu). The presence of these diffraction peaks and scattering peaks indicates a regular disposition of pores in the porous structure.

With the composite catalyst material in which one or more diffraction peaks or scattering peaks corresponding to a lattice spacing of 1 to 200 nm are observed, the presence of a regular disposition of pores having a uniform pore size in the porous structure can be expected to provide a high specific surface area and uniform gas diffusion behavior inside the pores.

As understood from the above description, it is preferable that the composite catalyst material is a nanocomposite material containing, particularly, noble metal, at least one of alkali metal and alkaline earth metal, and porous alumina, in which the noble metal is contained inside the porous alumina, the alkali metal and the alkaline earth metal are supported on the porous alumina containing the noble metal inside, and a mode in a pore size distribution is 1 to 200 nm in diameter. The composite catalyst material described above can produce ammonia with high efficiency. The porous alumina used in the composite catalyst material is preferably particulate porous alumina (mesoporous alumina) having a crystal structure, and the porous alumina has a regularly disposed porous structure.

### Examples

Hereinafter, the catalyst material used in the present invention will be described in more detail with reference to Examples, but the present invention is not limited to these Examples.

### <Example 1>

Example 1 was a catalyst material in which barium was supported on platinum-containing porous alumina. The mass ratio between platinum, barium, and porous alumina (platinum : barium : porous alumina) was 1 : 10 : 100.

For Example 1, preparation was performed as the following <1> to <3>.

### <1> Preparation of platinum-containing porous alumina precursor solution

(1) 15 g of Pluronic P123 (polyethylene oxide-polypropylene oxide-polyethylene oxide block copolymer) as an amphiphilic organic molecule was weighed into a stoppered Erlenmeyer flask, 120 mL of ethanol was added thereto, and 0.135 g of chloroplatinic acid hexahydrate was further added thereto, then stirring was performed with a magnetic stirrer and a stirrer.
(2) To a 3-neck flask, 60 mL of ethanol and 24.6 g of aluminum (tri-sec-butoxide) were added to prepare a dispersion. Concentrated hydrochloric acid (14.5 mL) was added dropwise to the dispersion over 10 minutes or more while continuously stirring the dispersion, and stirring was performed for 3 hours.
(3) The dispersion of (2) was added to the solution of (1) to prepare a platinum-containing porous alumina precursor solution.

### <2> Synthesis of platinum-containing porous alumina

(1) The platinum-containing porous alumina precursor solution was introduced into a spray dryer (ADL311 manufactured by Yamato Scientific Co., Ltd.), and water containing ethanol was removed by hot air drying together with spraying of the precursor solution. The inlet temperature of the spray dryer was set to 170°C. Thereafter, a precursor of platinum-containing porous alumina was recovered by a cyclone separator.
(2) The precursor recovered by the cyclone separator was calcined in a tubular furnace to remove Pluronic P123 serving as a template for pores and thus became porous, and thermal decomposition of a platinum compound (chloroplatinic acid hexahydrate) and crystallization of alumina were performed. The calcination was performed by raising the temperature to 850°C at 2°C per minute under a nitrogen stream, maintaining at the same temperature for 1 hour, and then further maintaining at the same temperature for 2 hours under an oxygen stream.

### <3> Support of barium on platinum-containing porous alumina

Barium was supported on platinum-containing porous alumina as a barium compound (Example 1 shows a barium compound produced by thermal decomposition of barium acetate, such as barium carbonate, barium oxide, and barium hydroxide) as described above.

Specifically, the barium compound on the platinum-containing porous alumina was supported by an impregnation and support method.
(1) Platinum-containing porous alumina was dispersed in distilled water, and an aqueous barium acetate solution was added dropwise thereto while vigorously stirring. The aqueous barium acetate solution was added dropwise so that the mass ratio between platinum-containing porous alumina and barium in the aqueous barium acetate solution (platinum-containing porous alumina : barium) was set to 101 : 10.
(2) The dispersion of (1) was shaken for 1 hour, then the dispersion was transferred to an eggplant flask, and distilled water was distilled off at 60°C under reduced pressure with a rotary evaporator to recover a powder. The powder was further dried at 110°C for 10 hours or more, and then calcined (heating rate: 10°C per minute under a dry air stream) at 500°C for 3 hours in a tubular furnace, thereby providing a catalyst material composed of platinum-containing porous alumina on which a barium compound was supported.

The average particle size of platinum (nanoparticles) in the platinum-containing porous alumina was 24 nm. The average particle size of platinum was determined by performing transmission electron microscope observation with JEM-2010 manufactured by JEOL Ltd., measuring the length of noble metal nanoparticles at 100 points, and determining the mode of the particle size (mode size).

### <Example 2>

Example 2 was a catalyst material in which calcium was supported on platinum-containing porous alumina. The mass ratio between platinum, calcium, and porous alumina (platinum : calcium : porous alumina) was 1 : 10 : 100.

The same manner was performed as in Example 1 except that an aqueous solution of calcium acetate monohydrate was used instead of the aqueous solution of barium acetate.

Also in Example 2, calcium was supported as a calcium compound on the platinum-containing porous alumina by an impregnation and support method.

Examples 1 and 2 were examples of the composite catalyst material described above.

### <Example 3>

Example 3 was a material in which both platinum (nanoparticles) and barium were supported on commercially available γ-alumina (manufactured by Strem Chemicals, Inc.). Example 3 was prepared as the following (1) to (4).
(1) γ-Alumina was pretreated at 500°C for 2 hours in a dry air stream.
(2) Using an ethanol solution of chloroplatinic acid hexahydrate, γ-alumina and platinum in (1) were mixed so as to set a mass ratio of 100 : 1.
(3) Ethanol was evaporated for dryness, and then calcined at 600°C for 3 hours in a dry air stream to prepare platinum-supported γ-alumina.
(4) Barium species were supported on the platinum-supported γ-alumina obtained in (3) in the same manner as in Example 1. The mass ratio between platinum-supported γ-alumina and barium atoms was set to 101 : 10.

### <Example 4>

Example 4 was a material in which both platinum and barium were supported on commercially available CeO₂ (manufactured by Daiichi Kigenso Kagaku Kogyo Co., Ltd.). Example 4 was prepared as the following (1) to (3).
(1) CeO₂ was pretreated at 500°C for 2 hours in a stream of dry air.
(2) An aqueous solution of dinitrodiammine platinum nitric acid and barium acetate was used to mix CeO₂, platinum, and barium atoms in (1) so as to set a mass ratio of 100 : 1 : 10.
(3) (2) was evaporated for dryness, and the obtained powder was dried at 100°C and then calcined at 600°C for 2 hours in a dry air stream to prepare barium-platinum-supported CeO₂.

### <Example 5>

Example 5 was a material in which platinum was supported on commercially available CeO₂ (manufactured by Daiichi Kigenso Kagaku Kogyo Co., Ltd.). The same manner as in Example 4 was performed except that a barium source was not used and CeO₂ and platinum were mixed so as to set a mass ratio of 100 : 1.

### <Example 6>

Example 6 was a catalyst material in which calcium was supported on platinum-containing porous alumina. The same manner as in Example 2 was performed except that the mass ratio of platinum, calcium, and porous alumina (platinum : calcium : porous alumina) was set to 1 : 4 : 100.

### <Example 7>

Example 7 was a catalyst material in which strontium was supported on platinum-containing porous alumina. The mass ratio between platinum, strontium, and porous alumina (platinum : strontium : porous alumina) was set to 1 : 9 : 100. The same manner as in Example 1 was performed except that an aqueous solution of strontium acetate 0.5 hydrate was used instead of the aqueous solution of barium acetate.

### <Comparative Example 1>

Comparative Example 1 was a material in which barium was supported on commercially available γ-alumina (manufactured by Strem Chemicals, Inc.). The same manner as in Example 4 was performed except that a platinum source was not used and γ-alumina and barium were mixed so as to set a mass ratio of 100 : 10.

### <1> Mode of pore size distribution

The mode of pore size distribution was measured for Examples 1 and 2, which were examples of the composite catalyst materials among the catalyst materials used in the present invention. The sample was heated at 110°C for 6 hours under reduced pressure to remove adsorbed water and the like, and then a nitrogen adsorption isotherm was measured with Autosorb-1 or Autosorb-iQ manufactured by Quantachrome Instruments, Inc. A pore size distribution was calculated from the adsorption isotherm by an NLDFT method (Software: AS1Win manufactured by Quantachrome Instruments, Inc.; Kernel of NLDFT method: N2 at 77K on Carbon, slit pore, NLDFT equilibrium model), and a mode in the pore size distribution was specified.

### <2> X-Ray diffraction measurement

Samples (Examples 1 and 2) were subjected to X-ray diffraction measurement with RINT 2100 (Fe radiation source, scanning angle: 0.6 degrees to 12 degrees, scanning speed: 2 degrees per minute) manufactured by Rigaku Corporation, and were confirmed whether a diffraction peak corresponding to a lattice spacing of 1 to 200 nm was able to be detected.

### <3> Test for producing ammonia from nitrogen oxide (NOx)

Tests were performed using a fixed bed flow reactor. Samples (Examples 1 to 7 and Comparative Example 1), 100 mg, were placed in a quartz reaction tube, and both ends thereof were fixed with quartz wool. Throughout the test, the gas flow rate was fixed at 100 mL/min.

As a pretreatment step, the sample temperature was set to 500°C, and was maintained in a nitrogen gas flow containing 10% oxygen for 1 hour to remove residual water and organic substances.

Then, as an NOx adsorption step, the sample temperature was set to 300°C, and was maintained in a nitrogen gas flow containing 1000 ppm of nitrogen monoxide (NO) and 10% oxygen for 1 hour. Thereafter, as an ammonia production step, maintaining for 1 hour was performed in a nitrogen gas stream containing 1% hydrogen.

In the second and subsequent tests, the pretreatment step was not performed, and only the NOx adsorption step and the ammonia production step were repeated. The NOx adsorption amount and the ammonia production amount were quantified using a Nicolet iS 20 infrared spectrophotometer manufactured by Thermo Fisher Scientific Inc. and a multiple reflection gas cell manufactured by PIKE Technologies Inc.

Table 1 shows the mode of the pore size distribution and the lattice spacing indicated by the diffraction peak by X-ray diffraction measurement.

**[Table 1]**

| Sample | Mode of pore size distribution (nm) | Lattice spacing indicated by diffraction peak (nm) |
|---|---|---|
| Example 1 | 6.0 | 8.3 |
| Example 2 | 7.1 | 8.8 |

As can be grasped from Table 1, in Examples 1 and 2 as an example of the composite catalyst material, the mode of the pore size distribution was within the range of a diameter of 1 to 200 nm, and a diffraction peak corresponding to a lattice spacing of 1 to 200 nm was observed. That is, in Examples 1 and 2, it was confirmed that pores were regularly disposed. In Examples 1 and 2, it is considered that pores are regularly disposed by self-assembly of amphiphilic organic molecules chemically interacting with an alumina source and subsequent removal of the amphiphilic organic molecules by calcination.

Table 2 is a table showing results of a test for producing ammonia from nitrogen oxide (NOx). Table 2 shows the NOx adsorption amount, the ammonia production amount from NOx, the yield of ammonia (ammonia production amount/NOx adsorption amount), and the maximum NH₃ concentration. The NOx adsorption amount and the NH₃ production amount per mass were calculated from the catalyst weight after the ammonia production test.

**[Table 2]**

| Sample | Number of use | NOx adsorption amount (mm ol/g) | Reducing gas | Amount of NH₃ (mm ol/g) | Amount of N₂O (mmol/g) | Rate of conversion to NH ₃ (%) | Maximum NH₃ concentration (PPm) |
|---|---|---|---|---|---|---|---|
| Example 1 | 1 | 0.38 | 1%H₂ | 0.31 | 0 | 82 | 1160 |
| 10Ba/1Pt-m-Al₂O₃ | 2 | 0.39 | | 0.28 | 0 | 70 | 1400 |
| | 3 | 0.38 | | 0.25 | 0 | 65 | 1380 |
| Example 2 | 1 | 0.25 | 1%H₂ | 0.11 | 0 | 43 | 170 |
| 10Ca/1Pt-m-Al₂O₃ | 2 | 0.18 | | 0.16 | 0 | 85 | 390 |
| | 3 | 0.17 | | 0.17 | 0 | 98 | 450 |
| Example 3 | 1 | 0.35 | 1%H₂ | 0.32 | 0 | 90 | 1480 |
| 10Ba+1Pt/γ-Al₂O₃ | 2 | 0.36 | | 0.12 | 0 | 33 | 770 |
| | 3 | 0.37 | | 0.10 | 0 | 27 | 720 |
| Example 4 | 1 | 0.90 | 1%H₂ | 0.46 | 0.01 | 51 | 1750 |
| 10Ba+1Pt/CeO₂ | 2 | 0.93 | | 0.39 | 0.01 | 42 | 1380 |
| | 3 | 0.96 | | 0.42 | 0.01 | 43 | 1430 |
| Example 5 | 1 | 0.16 | 1%H₂ | 0.01 | 0 | 3 | 4 |
| 1Pt/CeO₂ | 2 | 0.16 | | 0.01 | 0 | 3 | 4 |
| | 3 | 0.15 | | 0.01 | 0 | 3 | 4 |
| Example 6 | 1 | 0.36 | 1%H₂ | 0.22 | 0 | 62 | 930 |
| 4Ca/1Pt-m- Al₂O₃ | 2 | 0.27 | | 0.22 | 0 | 79 | 1060 |
| | 3 | 0.27 | | 0.21 | 0 | 78 | 900 |
| Example 7 | 1 | 0.68 | 1%H₂ | 0.36 | 0 | 53 | 1050 |
| 9Sr/1Pt-m- Al₂O₃ | 2 | 0.53 | | 0.31 | 0 | 59 | 840 |
| | 3 | 0.52 | | 0.29 | 0 | 55 | 840 |
| Comparative Example 1 | 1 | 0.16 | 1%H₂ | 0 | 0 | 0 | 0 |
| 10Ba/γ-Al₂O₃ | 2 | 0.09 | | 0 | 0 | 0 | 0 |
| | 3 | 0.07 | | 0 | 0 | 0 | 0 |

As shown in Table 2, it was confirmed that ammonia was generated in Examples 1 to 7 containing noble metal. On the other hand, in Comparative Example 1 containing no noble metal, ammonia was not generated.

It can be confirmed that in Examples 1 to 4, 6, and 7 containing both noble metal and at least one of alkali metal and alkaline earth metal, the ammonia production amount and the maximum ammonia concentration are higher than those in Example 5 containing only noble metal without containing alkali metal or alkaline earth metal.

Particularly, in Examples 1, 2, 6, and 7 as an example of the composite catalyst material, the yield of ammonia does not decrease even after the second use as compared with Examples 3 and 4. Particularly, in Examples 2, 6, and 7, the yield of ammonia is higher in the second and third times than in the first time. As described above, among catalyst materials, when using a composite catalyst material in which at least one of alkali metal and alkaline earth metal is supported on the surface of noble metal-containing porous alumina, ammonia can be repeatedly produced with high efficiency.

In addition, in Example 4, the N₂O production amount was sufficiently low, and particularly, in Examples 1 to 3 and 5 to 7, the production of N₂O was not confirmed.

Here, there has been conventionally proposed a technique of reducing nitrogen oxide (NOx) in the exhaust gas to nitrogen with a catalyst material (NSR catalyst). In this process, it is known that ammonia is produced as an intermediate product and N₂O is also produced. However, the greenhouse effect of N₂O is about 300 times that of CO₂, and thus a smaller N₂O production amount is more preferable. The N₂O production amount may increase depending on the catalyst material to be used.

The use of the composite catalyst material as a catalyst material can sufficiently reduce the N₂O production amount to produce ammonia from nitrogen oxides (NOx) (in other words, reduce nitrogen oxides to ammonia). Specifically, when the composite catalyst material is used, the concentration of N₂O produced together with ammonia is less than or equal to a measurable concentration range, and even if detected, about 5% or less relative to the concentration of ammonia.

It should be noted that in the production apparatus and the production method according to the present invention, the catalyst material to be used is optional. Any known catalyst material is used as appropriate as long as ammonia can be produced.

### Reference Signs List

- 20: production apparatus
- 30: control apparatus
- 40: combustor
- 50: feeder
- 100: production unit
- G1: source gas
- G1e: source gas used
- G2: reducing gas
- K1: first common path
- K2: second common path
- Q: catalyst material
- R1: first supply path
- R2: second supply path
- R3: recovery path
- R4: exhaust path
- U: reaction tube
- V1: first on-off valve
- V2: second on-off valve
- V3: third on-off valve
- V4: fourth on-off valve

## Claims

1. A production unit configured to produce ammonia, comprising:
a production apparatus including
a reaction tube in which a catalyst material containing noble metal is housed,
a first supply path configured to supply an exhaust gas containing NOx and oxygen to the reaction tube,
a second supply path configured to supply a reducing gas not containing NOx to the reaction tube, and
a recovery path configured to recover produced ammonia from the reaction tube; and
a control apparatus configured to control the production apparatus, wherein
the control apparatus makes the production apparatus perform a production process including:
a first step of supplying the exhaust gas to the catalyst material to allow NOx in the exhaust gas to be stored in the catalyst material; and
a second step of stopping supply of the exhaust gas, and then supplying the reducing gas to the catalyst material to produce and recover ammonia from NOx stored in the catalyst material.

2. The production unit according to claim 1, wherein
the production process is repeatedly performed.

3. A production unit configured to produce ammonia, comprising:
a production apparatus including
N (N is a natural number of 2 or more) reaction tubes in which a catalyst material containing noble metal is housed,
N first supply paths configured for respectively supplying exhaust gas containing NOx and oxygen to the N reaction tubes,
N second supply paths for respectively supplying a reducing gas not containing NOx to the N reaction tubes, and
N recovery paths configured for respectively recovering produced ammonia from the N reaction tubes; and
a control apparatus configured to control the production apparatus, wherein
for each of the N reaction tubes,
the control apparatus makes the production apparatus repeatedly perform a production process including:
a first step of supplying the exhaust gas to the reaction tube to store NOx in the exhaust gas in the catalyst material; and
a second step of stopping supply of the exhaust gas and then supplying the reducing gas to the reaction tube to produce and recover ammonia from NOx stored in the catalyst material,
the second step is performed for (N - K) reaction tubes while the first step is performed for K (K is a natural number less than N) reaction tubes among the N reaction tubes, and
the first step is performed for the (N - K) reaction tubes while the second step is performed for the K reaction tubes.

4. The production unit according to claim 3, wherein the production apparatus comprises:
N first on-off valves that respectively open and close the N first supply paths; and
N second on-off valves that respectively open and close the N second supply paths, and in the first step, the control apparatus opens the first on-off valves and closes the second on-off valves, and
in the second step, closes the first on-off valves and opens the second on-off valves.

5. The production unit according to claim 3, wherein the production apparatus comprises:
N exhaust paths configured to exhaust gas from the N reaction tubes;
N third on-off valves configured to open and close the N recovery paths; and
N fourth on-off valves configured to open and close the N exhaust paths, and
for each of the N reaction tubes,
the control apparatus closes the third on-off valves and opens the fourth on-off valves in the first step, and
opens the third on-off valves and closes the fourth on-off valves in the second step.

6. A production method for producing ammonia, the method comprising:
a first step of supplying an exhaust gas containing NOx and oxygen to a catalyst material containing noble metal to store NOx in the exhaust gas in the catalyst material; and
a second step of stopping supply of the exhaust gas, and then supplying a reducing gas not containing NOx to the catalyst material to produce and recover ammonia from NOx stored in the catalyst material.

7. A production method for producing ammonia, wherein
a production apparatus comprising N (N is a natural number of two or more) reaction tubes each containing a catalyst material containing noble metal performs repeatedly a production process including:
a first step of supplying exhaust gas containing NOx and oxygen to each of the N reaction tubes to store NOx in the exhaust gas in the catalyst material; and
a second step of stopping supply of the exhaust gas, and then supplying a reducing gas not containing NOx to the reaction tube to produce and recover ammonia from NOx stored in the catalyst material,
the second step is performed for (N - K) reaction tubes while the first step is performed for K (K is a natural number less than N) reaction tubes among the N reaction tubes, and
the first step is performed for the (N - K) reaction tubes while the second step is performed for the K reaction tubes.

8. The production method according to claim 6 or 7, wherein
the reducing gas contains any one or more of H₂, C₃H₆, C₃H₈, and CH₄.

9. The production method according to claim 6 or 7, wherein
at least one of temperatures of the exhaust gas and the reducing gas and a temperature of the catalyst material is 150 to 500°C.

10. The production method according to claim 6 or 7, wherein
the catalyst material contains the noble metal, at least one of alkali metal and alkaline earth metal, and oxide support.

11. The production method according to claim 6 or 7, wherein
the noble metal is one or more of platinum, palladium, rhodium, and iridium, and a content of the noble metal is 0.01 to 20.0 mass% relative to 100 mass% of the entire catalyst material.

12. The production method according to claim 10, wherein
the alkali metal is one or more selected from lithium, potassium, sodium, and cesium,
the alkaline earth metal is one or more selected from calcium, magnesium, strontium, and barium, and
contents of the alkali metal and the alkaline earth metal are 0.1 to 50.0 mass% relative to 100 mass% of the entire catalyst material.

13. The production method according to claim 10, wherein
the oxide support is any one or more of Al₂O₃, CeO₂, TiO₂, and ZrO₂.

14. The production method according to claim 10, wherein
the oxide support is Al₂O₃,
the noble metal is contained inside the Al₂O₃, and
the alkali metal and the alkaline earth metal are supported on the Al₂O₃ containing the noble metal inside.

15. A catalyst material used in the production method according to claim 6 or 7,
the catalyst material being a nanocomposite material including noble metal, at least one of alkali metal and alkaline earth metal, and porous alumina, wherein
the noble metal is contained inside the porous alumina,
the alkali metal and the alkaline earth metal are supported on the porous alumina containing the noble metal inside, and
a mode in a pore size distribution is 1 to 200 nm in diameter.
